Europäisches Patentamt

European Patent Office

Office européen des brevets

(11) Publication number: **0 511 640 A2**

(19) 

(12) **EUROPEAN PATENT APPLICATION**

(21) Application number: **92107287.2**

(22) Date of filing: **29.04.92**

(51) Int. Cl.5: **C08L 69/00**, C08K 5/10,
G11B 7/24

(30) Priority: **01.05.91 JP 126465/91**

(43) Date of publication of application:
**04.11.92 Bulletin 92/45**

(84) Designated Contracting States:
**DE FR GB**

(71) Applicant: **Teijin Chemicals, Ltd.**
**1-6-21, Nishishinbashi Minato-Ku**
**Tokyo(JP)**

(72) Inventor: **Shimada, Tsuneo**
**890-63, Wake-cho**
**Matsuyama-shi, Ehime-ken(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) **Molding material for optical moldings.**

(57) There is provided a molding material for optical moldings from which information recording media having a recording membrane excellent in long-term reliability can be prepared. This molding material is a composition comprising a polycarbonate having a viscosity average molecular weight of 13,000 to 18,000 and a carbon tetrachloride content of 0.1 ppm or less having compounded thereinto 0.001 to 0.1 weight part of a saturated monovalent fatty acid monoglyceride per 100 weight parts of the polycarbonate.

EP 0 511 640 A2

This invention relates to a molding material for optical moldings, comprising a polycarbonate. More detailedly, this invention relates to a molding material useful for preparing media for optically making the recording and regeneration of information, for example compact disk, video disk, and additional recording-type or reloading-type information recording media.

Polycarbonates are used, with exertion of their characteristics such as transparency, heat resistance and dimensional stability, as molding materials for substrates for optical information disks, or as molding materials for optical parts such as lenses and optical fibers. Particularly, as optical information recording materials are required highly pure polycarbonates in view of the durability of the recording membrane. As a method for obtaining such a polycarbonate, it is proposed, for example, to lower chloride components as disclosed in Japanese Laid-Open Patent Publication No. 97627/1988, 24829/1989 or 31690/1989, or to lower low molecular weight products (hereinafter referred to as oligomers) and/or unreacted dihydric phenols (hereinafter referred to as monomers) as disclosed in Japanese Laid-Open Patent Publication No. 278929/1988, 6020/1989 or 316313/1988. Further, Japanese Laid-Open Patent Publication Nos. 297320/1987 and 297321/1987 disclose that carbon tetrachloride existing in polycarbonates thermally decomposes at a high molding temperature and corrodes the molds.

As a method to remove impurities from polycarbonates, an acetone extraction method comprising extracting impurities in polycarbonates with acetone is disclosed in Japanese Laid-Open Patent Publication Nos. 279829/1988 and 6020/1989. The acetone extraction method is an excellent method capable of remarkably lowering halogenated solvents, monomers, oligomers, carbon tetrachloride, etc. remaining in polycarbonates. In the acetone extraction method, polycarbonate powder and acetone are put in a vessel and stirred to dissolve impurities existing in the polycarbonate powder into acetone, and then the solid part and liquid part are separated. The solid part is dried at 100 to 140°C, and the resulting powder is pelletized by an extruder. On the other hand, the liquid part is distilled, and acetone separated from the extract is repeatedly reused. However, it was confirmed that when the recording membrane of an optical information recording medium obtained by molding pellets of a polycarbonate purified by such method is held at a high temperature and at a high humidity, defects increase due to corrosion, and thus the recording membrane is poor in long-term reliability. The two prior art documents introducing the acetone extraction method are utterly silent about the above facts.

The object of this invention lies in providing polycarbonates from which information recording media having a recording membrane excellent in long-term reliability can be prepared.

As a result of intense study about causes of corrosion of recording membranes, the present inventors found that the corrosion is due to carbon tetrachloride existing in the polycarbonate and even an extremely small amount of carbon tetrachloride existing in the purified polycarbonate after acetone extraction has a bad influence.

Further, it was found that in the acetone extraction method, carbon tetrachloride accumulates in the acetone recovered and reused, without being sufficiently removed by distillation, and therefore an extremely small amount of carbon tetrachloride exists in the purified polycarbonate after the extraction. Namely, in the distillation step of acetone containing the extract, monomers, oligomers, etc. can be removed, but carbon tetrachloride forms an azeotropic mixture with acetone, as is disclosed in page 203 of Yobai Pocket Book (Solvent Pocket Book) edited by Yuki Gosei Kagaku Kyokai (Organic Synthetic Chemistry Association), and since the boiling point of this azeotropic mixture is close to the boiling point of acetone, carbon tetrachloride is hard to remove by conventional industrial scale distillation. Therefore, in proportion as the number of times of the recovering and reuse of acetone increases, the concentration of carbon tetrachloride increases and an extremely small amount of carbon tetrachloride comes to exist in the purified polycarbonate. Although this problem can be solved by substituting fresh acetone for the acetone under use in a short term, this operation is industrially extremely disadvantageous.

Based on the above findings, the present inventors further investigated on influence of carbon tetrachloride, and as a result, they found that, unexpectedly, when the content of carbon tetrachloride is equal to or less than a certain value, monoglycerol esters of monovalent saturated fatty acids are extremely effective as decomposition inhibitors of carbon tetrachloride, prevent the bad influences of carbon tetrachloride and make it possible to prepare information recording media having recording membranes excellent in long-term reliability, and, as a result of further investigation, completed this invention.

Thus, according to this invention is provided a molding material for optical moldings which is a composition comprising 100 weight parts of a polycarbonate having a viscosity-average molecular weight of 13,000 to 18,000 and a carbon tetrachloride content of 0.1 ppm or less, and 0.001 to 0.1 weight part of a saturated monovalent fatty acid monoglyceride.

Polycarbonates used in this invention may be those obtained by optional methods, but usually they are homo- or copolycarbonates prepared by a phosgene method, particularly an interfacial polymerization method using a dihydric phenol and phosgene as raw materials and methylene chloride as a solvent. They may optionally be branched ones, ones at the terminus of which a long chain alkyl group is introduced or ones wherein styrene or the like is grafted into modified polycarbonates, or may further optionally be a poly(ester-carbonate) obtained by replacing part of phosgene by terephthaloyl chloride, isophthaloyl chloride or the like. As the dihydric phenol, 2,2-bis(4-hydroxyphenyl)propane (alias bisphenol A) is usually used, but part or all thereof may be replaced by other dihydric phenols. The polymerization degree is 13,000 to 18,000 in terms of viscosity-average molecular weight. Those having a viscosity-average molecular weight under 13,000 are short of physical properties such as impart strength and thus not suitable as molding materials for optical moldings, and those having a viscosity-average molecular weight more than 18,000 are not suitable as molding materials for optical moldings, either, because they have a high melt viscosity and thus distortion is liable to occur at the time of melt molding. Further, the polycarbonate to be used in this invention must be such that the amount of carbon tetrachloride contained therein is 0.1 ppm or less. In case of a polycarbonate containing carbon tetrachloride in an amount more than 0.1 ppm, even when a large amount of a saturated monovalent fatty acid monoglyceride is compounded, decomposition of carbon tetrachloride cannot sufficiently be prevented and thus the object of the invention cannot be attained.

The saturated monovalent fatty acid monoglycerides to be used in this invention are, usually, monoesters of saturated monovalent fatty acids having 16 to 22 carbon atoms with glycerol, and, for example, stearic acid monoglyceride, palmitic acid monoglyceride, etc. are preferred and stearic acid monoglyceride is particularly preferred. Such saturated monovalent fatty acid monoglycerides may be used alone or as a mixture of two or more of them. A saturated monovalent fatty acid monoglyceride is usually prepared by transesterification of a hydrogenated animal or vegetable oil with glycerol. Although the reaction product also contains esters other than the monoglyceride, it can, as such, be used as a saturated monovalent fatty acid monoglyceride in the invention. Namely, the saturated monovalent fatty acid monoglyceride may be a mixture with a smaller or larger amount of a diglyceride and/or a triglyceride.

The optimum use amount of the saturated monovalent fatty acid monoglyceride is influenced by the amount of carbon tetrachloride contained in the polycarbonate, and it is preferred to increase the use amount of the saturated monovalent fatty acid monoglyceride in proportion to increase of the amount of carbon tetrachloride. However, usually, the use amount is 0.001 to 0.1 weight part, and preferably an amount equal to or more than 0.001 weight part and under 0.01 weight part. In case this use amount is under 0.001 weight part, decomposition of carbon tetrachloride cannot sufficiently be prevented and thus the object of the invention cannot be attained. Further, its use in an amount beyond 0.1 weight part is unnecessary because of saturation of its effect to prevent decomposition of carbon tetrachloride.

Saturated monovalent fatty acid monoglycerides have hitherto been known as mold release agents, as is disclosed in Japanese Laid-Open Patent Publication No. 113201/1985. When a saturated monovalent fatty acid monoglyceride is used as a mold release agent, its use amount is 0.01 to 0.2 weight part per 100 weight parts of a resin, as is disclosed in the above publication. In this invention, a saturated monovalent fatty acid monoglyceride is used for the purpose of inhibiting thermal decomposition of carbon tetrachloride contained as an impurity in a polycarbonate. Its preferred use amount is in the range between 0.001 weight part and under 0.01 weight per 100 weight parts of the polycarbonate, as was stated above. However, when it is used in an amount of 0.01 to 0.1 weight part per 100 weight parts of the polycarbonate, mold release effect can also be obtained at the same time in addition to its effect to inhibit thermal decomposition of carbon tetrachloride. Of course, it is also possible to use together an appropriate amount of a saturated monovalent fatty acid monoglyceride and another mold release agent.

In compounding a saturated monovalent fatty acid monoglyceride into a polycarbonate, an optional means can be adopted. For example, the former can simply be mixed with powder or pellets of the polycarbonate using a tumbler, V type blender, supermixer or the like. Further, at the time of mixing, there may, if necessary, be mixed therewith, for example a heat stabilizer, an antioxidant, an ultraviolet absorber, a colorant, etc.

This invention is more specifically described below according to examples. Parts in the examples represent weight parts. The content of carbon tetrachloride was measured by putting 10 g of a sample in a vessel made of stainless steel and using ECD-GC according to the headspace method under the conditions of 180°C and 4 hours. Reliability of the recording membrane was evaluated by holding a sample comprising an optical disk having a diameter of 130 mm and grooves, having sputtered thereon a Te/Fe/Co alloy and further having provided thereon an UV cured coat membrane, under a high temperature and high humidity atmosphere of 80°C and 90 % RH for 500 hours, and thereafter measuring the number of defects of a length of 30 $\mu$m or more on the disk surface using an automatic defect-inspecting apparatus.

3

Examples 1 to 3

A methylene chloride solution of a bisphenol A polycarbonate having a viscosity-average molecular weight of 15,200 prepared by a usual phosgene method was washed with pure water until by-products such as sodium chloride were not detected, granulated by a kneader, steam distillated at 95°C for 4 hours, dehydrated by a centrifuge, and dried at 145°C for 8 hours by a paddle dryer. 100 parts of the resulting polycarbonate powder was put, together with 320 part of acetone not containing carbon tetrachloride, into a stirring apparatus, subjected to extraction treatment for 2 hours and then subjected to solid-liquid separation, and the solid portion was dried at 140°C for 4 hours. The additives indicated in Table 1 were mixed, in the amounts indicated in Table 1, with 100 parts portions of the resulting powder, respectively, and the respective mixtures were pelletized by an extruder equipped with a vent. The content of carbon tetrachloride measured about the respective pellets was revealed to be 0.01 ppm or less about all the pellets. After drying at 120°C for 8 hours, the respective pellets were molded into disks having a diameter of 130 mm using an injection molding machine for disk at a cylinder temperature of 330°C, and the respective disks were tested for reliability of the recording membrane. The results were shown in Table 1.

Table 1

| Example | Additive | Addition amount (part) | Defect number | |
|---|---|---|---|---|
| | | | Initial stage | After test |
| Example 1 | Stearic acid monoglyceride | 0.005 | 10 | 15 |
| Example 2 | Stearic acid monoglyceride | 0.050 | 13 | 16 |
| Example 3 | Stearic acid monoglyceride<br>Pentaerythritol tetrastearate | 0.005<br>0.050 | 9 | 14 |

Examples 4 to 6 and Comparative examples 1 to 4

100 parts of the same polycarbonate powder as in Example 1 was put, together with 320 parts of acetone containing 20 ppm carbon tetrachloride, into a stirring apparatus, subjected to extraction treatment for 2 hours and then subjected to solid-liquid separation, and the solid portion was dried at 140°C for 4 hours. The additives indicated in Table 2 were mixed, in the amounts indicated in Table 2, with 100 parts portions of the resulting powder, respectively, and the respective mixtures were pelletized by an extruder equipped with a vent. The content of carbon tetrachloride measured about the respective pellets was revealed to be 0.06 ppm about all the pellets. Disks were molded from the respective pellets in the same manner as in Example 1 and tested for reliability of the recording membrane. The results were shown in Table 2.

Table 2

| Example | Additive | Addition amount (part) | Defect number | |
|---|---|---|---|---|
| | | | Initial stage | After test |
| Example 4 | Stearic acid monoglyceride | 0.005 | 11 | 20 |
| Example 5 | Stearic acid monoglyceride | 0.050 | 15 | 27 |
| Comparative Example 1 | Stearyl stearate | 0.005 | 13 | 88 |
| Comparative Example 2 | Stearyl stearate | 0.050 | 9 | 75 |
| Comparative Example 3 | Pentaerythritol tetrastearate | 0.005 | 15 | 70 |
| Comparative Example 4 | Pentaerythritol tetrastearate | 0.050 | 14 | 62 |
| Example 6 | Stearic acid monoglyceride Pentaerythritol tetrastearate | 0.005 0.050 | 12 | 23 |

Comparative example 5 to 11

100 parts of the same polycarbonate powder as in Example 1 was put, together with 320 parts of acetone containing 100 ppm carbon tetrachloride, into a stirring apparatus, subjected to extraction treatment for 2 hours and then subjected to solid-liquid separation, and the solid portion was dried at 140°C for 4 hours. The additives indicated in Table 3 were mixed, in the amounts indicated in Table 3, with 100 parts portions of the resulting powder, and pelletized by an extruder equipped with a vent. The content of carbon tetrachloride measured about the respective pellets was revealed to be 0.32 ppm about all the pellets. Disks were molded from the respective pellets in the same manner as in Example 1 and tested for reliability of the recording membrane. The results were shown in Table 3.

Table 3

| Example | Additive | Addition amount (part) | Defect number Initial stage | Defect number After test |
|---|---|---|---|---|
| Comparative Example 5 | Stearic acid monoglyceride | 0.005 | 9 | 56 |
| Comparative Example 6 | Stearic acid monoglyceride | 0.050 | 12 | 38 |
| Comparative Example 7 | Stearyl stearate | 0.005 | 10 | 326 |
| Comparative Example 8 | Stearyl stearate | 0.050 | 8 | 274 |
| Comparative Example 9 | Pentaerythritol tetrastearate | 0.005 | 13 | 298 |
| Comparative Example 10 | Pentaerythritol tetrastearate | 0.050 | 11 | 252 |
| Comparative Example 11 | Stearic acid monoglyceride Pentaerythritol tetrastearate | 0.005 0.050 | 6 | 75 |

From the data indicated in the above examples, it is apparent that the molding material of this invention prevents the bad influence of carbon tetrachloride remaining in the polycarbonate and thus is suitable for preparing an information recording medium having a recording membrane excellent in long-term reliability.

## Claims

1. A molding material for optical moldings which is a composition comprising 100 weight parts of a polycarbonate having a viscosity-average molecular weight of 13,000 to 18,000 and a carbon tetrachloride content of 0.1 ppm or less, and 0.001 to 0.1 weight part of a saturated monovalent fatty acid monoglyceride.

2. The molding material of claim 1 wherein said saturated monovalent fatty acid monoglyceride is a monoester of a saturated monovalent fatty acid having 16 to 22 carbon atoms with glycerol.

3.  The molding material of claim 1 wherein said saturated monovalent fatty acid monoglyceride is stearic acid monoglyceride or palmitic acid monoglyceride.

4.  The molding material of claim 1 which is a composition comprising 100 weight parts of a polycarbonate and a saturated monovalent fatty acid monoglyceride in an amount equal to or more than 0.001 weight part and under 0.01 weight part.